# FASCICULE DE BREVET EUROPEEN

(11) **EP 1 754 024 B1**
(45) Date de publication et mention de la délivrance du brevet: **04.07.2018**
(21) Numéro de dépôt: 05773256.2
(22) Date de dépôt: 20.05.2005
(51) Int. Cl.: G01D 11/28

(54) **DISPOSITIF INDICATEUR A AIGUILLE ECLAIREE**
ZEIGEGERÄT MIT BELEUCHTETEM ZEIGER
INDICATING DEVICE PROVIDED WITH A LIGHTED POINTER

(30) Priorité: 04.06.2004 FR 0406045
(43) Date de publication de la demande: 21.02.2007
(73) Titulaire: Johnson Controls Technology Company, Milwaukee, WI 53209 (US)
(72) Inventeur: FOURNIER, Joël, F-95000 CERGY (FR)
(74) Mandataire: Lavialle, Bruno François Stéphane
(86) Numéro de dépôt international: PCT/FR2005/001263
(87) Numéro de publication internationale: WO 2006/003273

(56) Documents cités:
- EP-A- 0 295 165
- EP-A- 0 679 871
- DE-A- 2 902 009
- DE-A1- 3 425 029
- GB-A- 2 024 426
- JP-A- 2003 014 508
- US-A- 3 033 155
- US-A- 4 044 708
- US-A1- 2002 108 554

## Description

La présente invention concerne un dispositif indicateur à aiguille tel que ceux utilisés notamment à bord des véhicules automobiles pour afficher la vitesse ou le régime moteur du véhicule.

### ARRIERE-PLAN TECHNOLOGIQUE

Un tel dispositif indicateur comprend généralement une platine supportant un cadran devant lequel est montée pour pivoter une aiguille ayant une extrémité fixée à un axe d'entraînement et une extrémité libre.

Il connu d'associer à l'aiguille un organe d'illumination facilitant la visualisation de la position de l'aiguille par rapport au cadran et améliorant ainsi la lisibilité du dispositif indicateur.

Dans certains dispositifs indicateurs, l'organe d'illumination comporte une diode électroluminescente fixée à l'extrémité libre de l'aiguille. L'alimentation de la diode électroluminescente est rendue délicate du fait de la mobilité de l'aiguille.

Pour obvier à cet inconvénient, il est connu des dispositifs indicateurs dans lesquels des diodes électroluminescentes sont montées sur la platine au voisinage de l'axe d'entraînement de l'aiguille pour émettre un faisceau lumineux vers une portion d'entrée aménagée dans l'extrémité fixée de l'aiguille, l'aiguille comportant au voisinage de son extrémité libre une portion de sortie du faisceaux lumineux orientée à l'opposé du cadran vers l'utilisateur. L'alimentation des diodes électroluminescentes est alors particulièrement simple. En revanche, la zone de la platine au voisinage de l'axe d'entraînement peut être relativement encombrée, rendant l'implantation des diodes électroluminescentes difficile, tel que cela est illustré dans le document EP0679871 B1.

On connaît également du document EP0295165 des dispositifs indicateur comprenant un organe optique guide lumière et un cadran destiné à transmettre un faisceau lumineux à une aiguille. L'aiguille éclairée transmet à son tour le faisceau lumineux uniquement à la partie du cadran se trouvant au voisinage de l'aiguille. Ainsi, l'éclairage complet du cadran nécessite au moins une deuxième source lumineuse complexifiant la réalisation du dispositif indicateur.

En outre, il existe des dispositifs indicateurs dans lesquels le cadran est formé d'une couronne qui permet de disposer au centre du cadran d'un espace susceptible de recevoir par exemple un afficheur à cristaux li10 guides ou LCD (pour "Liquid Crystal Display"). L'aiguille est alors entraînée le long d'un bord interne du cadran par un bras pivotant en arrière de l'afficheur ou par un ensemble pignon crémaillère. La solution précédente est difficilement applicable à de tels dispositifs indicateurs. Les documents DE3425029 et JP2003014508 décrivent par exemples des dispositifs indicateurs selon l'état de la technique.

### OBJET DE L'INVENTION

Un but de l'invention est de fournir un dispositif indicateur à aiguille pourvu d'un moyen d'illumination de l'aiguille qui soit simple et facilement positionnable au sein du dispositif.

### BREF EXPOSE DE L'INVENTION

A cet effet, on prévoit, selon l'invention, un dispositif indicateur comportant : un boîtier comprenant une platine sur laquelle est monté un afficheur, un cadran solidaire du boîtier en avant de l'afficheur, un bras monté sur la platine pour pivoter entre la platine et l'afficheur parallèlement à ceux-ci, le bras ayant une portion terminale recourbée pour chevaucher une portion externe de l'afficheur, une aiguille étant montée sur cette extrémité libre pour s'étendre devant le cadre et pour être mobile en regard dudit cadran, l'aiguille étant pourvue d'une portion d'entrée et d'une portion de sortie d'un faisceau lumineux produit par au moins un organe d'illumination, l'organe d'illumination étant positionné pour émettre le faisceau lumineux vers le cadran et en ce que le cadran est agencée pour former un organe de guidage du faisceau lumineux vers la portion d'entrée de l'aiguille. Ainsi, il n'est pas nécessaire de positionner l'organe d'illumination au voisinage immédiat ou en regard de l'aiguille, ce qui simplifie la conception du dispositif indicateur et la structure en résultant.

Selon un mode de réalisation avantageux, le cadran comprend une face d'entrée et une face de sortie du faisceau lumineux, une ouverture définie par un bord interne du cadran et dans laquelle s'étend une partie de l'aiguille, le bord interne du cadran formant la face de sortie du faisceau lumineux et la portion d'entrée du faisceau lumineux dans l'aiguille étant agencée sur la partie de l'aiguille reçue dans l'ouverture en regard du bord interne.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels:

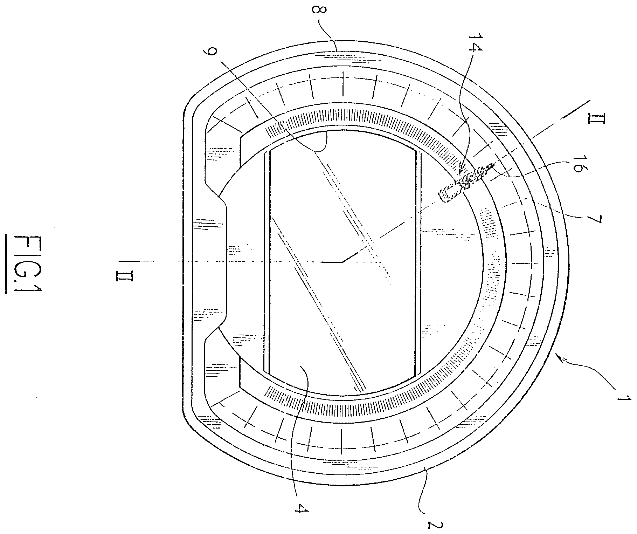

- la figure 1 est une vue de face d'un dispositif indicateur conforme à l'invention ;

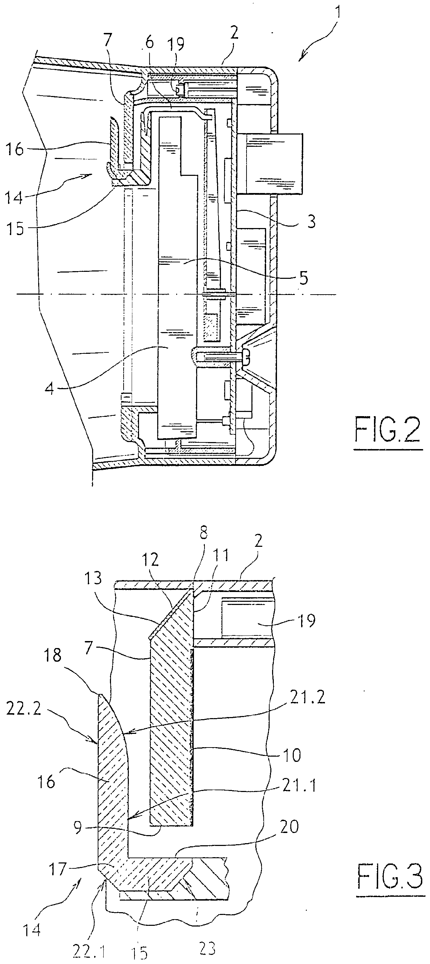

- la figure 2 est une vue schématique de ce dispositif en coupe selon la ligne II-II de la figure 1 ;
- la figure 3 est une vue partielle de détail du dispositif de la figure 2. DESCRIPTION DE L'INVENTION

L'invention est ici décrite en application à un dispositif indicateur implanté dans un véhicule automobile, combinant l'affichage de la vitesse et du régime moteur.

Le dispositif indicateur est généralement désigné en 1 et comprend un boîtier 2 contenant une platine 3 sur laquelle est monté un afficheur 4 à cristaux liquides ou LCD qui est relié à un dispositif de mesure de la vitesse qui est connu en lui-même et n'est pas représenté.

Un bras 5 est monté sur la platine 3 pour pivoter entre la platine 3 et l'afficheur 4 parallèlement à ceux-ci. Le bras 5 a une extrémité solidaire d'un arbre de sortie d'un moteur électrique qui est fixé d'un côté de la platine 3 opposé au bras 5 et qui est relié à un dispositif de mesure du régime moteur non représenté et connu en lui-même.

Le bras 5 a une portion terminale 6 recourbée pour chevaucher une portion externe de l'afficheur 4 et avoir une extrémité libre s'étendant devant l'afficheur 4 et derrière un cadran en forme de bande graduée disposée de façon circonférentielle sur l'indicateur 7 solidaire du boîtier 2 en avant de l'afficheur 4.

Le cadran 7 a sensiblement une forme de couronne ayant un bord externe 8 et un bord interne 9 circulaires sur la majeure partie de leurs longueurs. Le bord interne 9 est une surface annulaire.

Le cadran 7 est réalisée en un matériau transparent, ici du polymétacrylate de méthyle (PMMA), et possède un fond plan dont une portion 10 au voisinage du bord interne 9 porte des graduations sérigraphiées et une portion 11 au voisinage du bord externe 8 est vierge. Les graduations sont lisibles au travers du matériau constituant le cadran 7. A l'opposé du fond, le cadran 7 comporte une face 12 qui est adjacente au bord externe 8 et qui forme un angle avec la portion 11. La face 12 est recouverte d'un revêtement réfléchissant 13 dont la fonction sera mise en lumière ci-après. Le revêtement réfléchissant 13 est par exemple une peinture.

La portion terminale 6 a son extrémité libre en saillie du bord interne 9 du cadran 7. Une aiguille généralement désignée en 14 est montée sur cette extrémité libre pour s'étendre devant le cadran 7. Plus précisément, l'aiguille 14 est réalisée en un matériau transparent comme du polymétacrylate de méthyle (PMMA) et comprend ici un doigt 15 fixé à l'extrémité libre de la portion terminale 6 et une partie indicatrice 16 ayant une extrémité 17 solidaire du doigt 15 et une extrémité opposée libre 18 de telle manière que le doigt 15 s'étendent au voisinage du bord interne 9 et que la partie indicatrice 16 s'étende en porte-à-faux à partir du doigt 15 au-dessus de la portion 10 du cadran 7.

Le dispositif indicateur comprend en outre un dispositif d'illumination comprenant des diodes électroluminescentes 19 associées à des moyens de guidage de la lumière vers l'utilisateur via l'aiguille 14.

Les diodes électroluminescentes 19 sont disposées dans le boîtier 2 selon une répartition angulaire régulière derrière le cadran 7 en regard de la portion 11 pour émettre un faisceau lumineux en direction de cette portion qui constitue la face d'entrée du faisceau lumineux dans le cadran 7.

Le cadran 7 comprend une face de sortie du faisceau lumineux qui est formée par la face annulaire constituant le bord interne 9 du cadran 7, et la face 12 constitue une face de renvoi du faisceau lumineux provenant de la face d'entrée formée par la portion 11 vers la face de sortie formée par le bord interne 9.

Le doigt 15 comprend une face 20 parallèle au bord interne 9 de la du cadran 7 et en regard de ce bord interne 9 pour constituer la portion d'entrée du faisceau lumineux dans l'aiguille 14. A l'opposé de la face 20, le doigt 15 comprend une face de renvoi 23 formant un angle aigu avec la face 20.

La partie indicatrice 16 comprend une surface 21 s'étendant du côté du cadran 7 (ici la surface inférieure) et une surface 22 s'étendant à l'opposé du cadran 7 (ici la surface supérieure) qui convergent l'une vers l'autre en direction de l'extrémité 18. La surface 21 comprend au niveau de l'extrémité 17 une face plane 21.1 qui est sensiblement normale au doigt 15 et une face incurvée convexe 21.2 s'étendant vers l'extrémité 18. La surface 22 comporte une face inclinée 22.1 formant un angle aigu avec la face 21.1 et une face plane 22.2 sensiblement normale au doigt 15 s'étendant vers l'extrémité 18 et formant un angle aigu avec la face 21.2.

On comprend que le faisceau lumineux produit par les diodes électroluminescentes 19 rentre dans le cadran 7 par la portion 11 et est renvoyé par la face 12 vers le bord interne 9 par lequel il sort de du cadran 7 pour rentrer par la face 20 dans l'aiguille 14. Le cadran 7 constitue donc un organe du guidage du faisceau lumineux vers l'aiguille 14. Le faisceau lumineux est alors renvoyé successivement par les faces 23, 22.1 et 21.2 pour sortir de l'aiguille 14 par la face 22.2 en direction de l'utilisateur. La face 20 étant située au voisinage de l'extrémité de liaison de l'aiguille et la face 22.2 se prolongeant jusqu'à l'extrémité libre de l'aiguille, l'aiguille forme un organe de guidage du faisceau lumineux qui est ici guidé sur toute la longueur de l'aiguille pour ressortir de façon répartie le long de la partie indicatrice de celle-ci grâce aux faces de renvoi 21.1 et 21.2.

On constate que la portion d'entrée du faisceau lumineux dans l'aiguille 14 est la face 20 perpendiculaire à un plan de déplacement de l'aiguille 14 et que la portion de sortie du faisceau lumineux hors de l'aiguille est la face 22.2 sensiblement parallèle à ce plan de déplacement.

On note également que l'aiguille 14 est entraînée par le bras 5 pour suivre une trajectoire incurvée et que la face de sortie du faisceau lumineux cadran 7, à savoir le bord interne 9, s'étend parallèlement à cette trajectoire incurvée de telle manière que la face 20 soit constamment orientée vers le bord interne 9 au cours du déplacement de l'aiguille le long de la trajectoire incurvée.

Bien entendu l'invention n'est pas limitée au mode de réalisation qui vient d'être décrit, mais englobe au contraire toute variante reprenant, avec des moyens équivalents, les caractéristiques essentielles énoncées plus haut.

En particulier, le cadran peut servir à l'indication de la valeur d'autres paramètres que le régime moteur, et par exemple une vitesse, une pression, une altitude, une capacité...

L'afficheur est facultatif et le cadran peut être réalisée de manière classique en forme de disque, l'aiguille étant entraînée directement en pivotement par un axe, ou en forme de règle le long de laquelle l'aiguille se déplace. D'autres formes sont en outre possibles.

Le moyen d'entraînement de l'aiguille peut être un moteur électrique ou un mouvement.

Le nombre et l'agencement des diodes électroluminescentes peuvent être différents. Le dispositif d'illumination peut ainsi comprendre plus de six diodes dont certaines sont regroupées localement ou ont des couleurs différents pour faire ressortir des zones du cadran.

L'organe d'illumination peut en outre comprendre des sources à incandescence.

Les faces de renvoi peuvent voir leur caractéristique de réfléchissement augmentée par des traitements ou le dépôt de revêtements réfléchissants. Ceci est toutefois facultatif.

L'aiguille peut avoir une forme différente, avec des faces d'entrée, de sortie et de renvoi agencées différemment les unes par rapport aux autres.

Le matériau du cadran peut être différent du PMMA et être par exemple un autre matériau thermoplastique transparent.

Le cadran peut avoir un bord externe défini par une surface annulaire parallèle au bord interne. Les diodes peuvent alors être positionnées pour émettre le faisceau directement dans ce bord externe qui forme la face d'entrée du cadran.

## Revendications

1. Dispositif indicateur comportant :
un boîtier (2) comprenant une platine (3) sur laquelle est monté un afficheur (4),
- un cadran (7) solidaire du boîtier en avant de l'afficheur (4),
- un bras (5) monté sur la platine (3) pour pivoter entre la platine (3) et l'afficheur (4) parallèlement à ceux-ci, le bras ayant une portion terminale (6) recourbée pour chevaucher une portion externe de l'afficheur, une aiguille (14) étant montée sur cette extrémité libre pour s'étendre devant le cadre et pour être mobile en regard dudit cadran, l'aiguille étant pourvue d'une portion d'entrée (20) et d'une portion de sortie (22.2) d'un faisceau lumineux produit par au moins un organe d'illumination (19), l'organe d'illumination étant positionné pour émettre le faisceau lumineux vers le cadran et en ce que le cadran est agencée pour former un organe de guidage du faisceau lumineux vers la portion d'entrée de l'aiguille.

2. Dispositif indicateur selon la revendication 1, dans lequel le cadran (7) comprend une face d'entrée (11) et une face de sortie (9) du faisceau lumineux, et le cadran (7) comprenant une ouverture définie par un bord interne du cadran et dans laquelle s'étend une partie (15) de l'aiguille (14), le bord interne du cadran formant la face de sortie du faisceau lumineux et la portion d'entrée (20) du faisceau lumineux dans l'aiguille étant agencée sur la partie de l'aiguille reçue dans l'ouverture en regard du bord interne.

3. Dispositif indicateur selon la revendication 2, **caractérisé en ce que** la face d'entrée (11) étant perpendiculaire au faisceau lumineux, le cadran (7) comprend au moins une face de renvoi (12) du faisceau lumineux provenant de la face d'entrée vers la face de sortie (9).

4. Dispositif indicateur selon la revendication 3, **caractérisé en ce que** la face de renvoi (12) est recouverte d'un revêtement réfléchissant (13) s'étendant sur la portion correspondante du cadran.

5. Dispositif indicateur selon la revendication 3, **caractérisé en ce que** la portion d'entrée (20) de l'aiguille (14) est une face perpendiculaire à un plan de déplacement de l'aiguille et **en ce que** la portion de sortie (22.2) de l'aiguille (14) est une face sensiblement parallèle à ce plan de déplacement.

6. Dispositif indicateur selon la revendication 5, **caractérisé en ce que** l'aiguille (14) est montée pour suivre une trajectoire incurvée et la face de sortie (9) du cadran (7) s'étend parallèlement à cette trajectoire incurvée de telle manière que la portion d'entrée (20) de l'aiguille soit constamment orientée vers la face de sortie du cadran au cours de son déplacement le long de la trajectoire incurvée.

7. Dispositif indicateur selon la revendication 6, **caractérisé en ce que** la face d'entrée (11) et la face de renvoi (12) du cadran sont adjacentes à un bord externe (8) du cadran.

## Patentansprüche

1. Anzeigevorrichtung, umfassend:
ein Gehäuse (2), das eine Platine (3) umfasst, auf der eine Anzeige (4) angebracht ist,
- eine Skalenscheibe (7), die vor der Anzeige (4) mit dem Gehäuse verbunden ist,
- einen Arm (5), der auf der Platine (3) gelagert ist, um sich zwischen der Platine (3) und der Anzeige (4) parallel zu denselben zu drehen, wobei der Arm einen umgebogenen Endabschnitt (6) hat, um über einen Außenabschnitt der Anzeige zu greifen, wobei eine Nadel (14) an diesem freien Ende angebracht ist, um sich vor der Skalenscheibe zu erstrecken und um gegenüber der genannten Skalenscheibe beweglich zu sein, wobei die Nadel mit einem Eintrittsabschnitt (20) und einem Austrittsabschnitt (22.2) für ein Lichtstrahlenbündel versehen ist, das von mindestens einem Beleuchtungsorgan (19) erzeugt wird, wobei das Beleuchtungsorgan so positioniert ist, dass es das Lichtstrahlenbündel in Richtung der Skalenscheibe aussendet, und dass die Skalenscheibe so ausgebildet ist, dass sie ein Führungsorgan zum Führen des Lichtstrahlenbündels in Richtung des Eintrittsabschnittes der Nadel bildet.

2. Anzeigevorrichtung nach Anspruch 1, bei der die Skalenscheibe (7) eine Eintrittsfläche (11) und eine Austrittsfläche (9) für das Lichtstrahlenbündel umfasst und die Skalenscheibe (7) eine Öffnung enthält, die von einem Innenrand der Skalenscheibe definiert ist und in der sich ein Teil (15) der Nadel (14) erstreckt, wobei der Innenrand der Skalenscheibe die Austrittsfläche des Lichtstrahlenbündels bildet und der Eintrittsabschnitt (20) zum Eintritt des Lichtstrahlenbündels in die Nadel auf dem Teil der Nadel ausgebildet ist, der in der Öffnung gegenüber dem Innenrand aufgenommen ist.

3. Anzeigevorrichtung nach Anspruch 2, **dadurch gekennzeichnet, dass** unter Berücksichtigung, dass die Eintrittsfläche (11) senkrecht zum Lichtstrahlenbündel ist, die Skalenscheibe (7) mindestens eine Umlenkfläche (12) zum Umlenken des von der Eintrittsfläche stammenden Lichtstrahlenbündels in Richtung der Austrittsfläche (9) umfasst.

4. Anzeigevorrichtung nach Anspruch 3, **dadurch gekennzeichnet, dass** die Umlenkfläche (12) von einem reflektierenden Überzug (13) überzogen ist, der sich auf dem entsprechenden Abschnitt der Skalenscheibe erstreckt.

5. Anzeigevorrichtung nach Anspruch 3, **dadurch gekennzeichnet, dass** der Eintrittsabschnitt (20) der Nadel (14) eine Fläche ist, die senkrecht zu einer Bewegungsebene der Nadel ist, und dass der Austrittsabschnitt (22.2) der Nadel (14) eine Fläche ist, die im Wesentlichen parallel zu dieser Bewegungsebene ist.

6. Anzeigevorrichtung nach Anspruch 5, **dadurch gekennzeichnet, dass** die Nadel (14) so gelagert ist, dass sie einer gebogenen Bahn folgt und sich die Austrittsfläche (9) der Skalenscheibe (7) parallel zu dieser gebogenen Bahn erstreckt, derart, dass der Eintrittsabschnitt (20) der Nadel während ihrer Bewegung entlang der gebogenen Bahn ständig in Richtung der Austrittsfläche der Skalenscheibe gerichtet ist.

7. Anzeigevorrichtung nach Anspruch 6, **dadurch gekennzeichnet, dass** die Eintrittsfläche (11) und die Umlenkfläche (12) der Skalenscheibe an einen Außenrand (8) der Skalenscheibe angrenzen.

## Claims

1. Indicating device comprising:
a housing (2) containing a plate (3) on which a display (4) is mounted,
- a dial (7) which is secured to the housing, in front of the display (4)
- an arm (5) which is mounted on the plate (3) to pivot at a point between the plate (3) and the display (4) parallel to these latter, the arm having a terminal portion (6) which is bent to overlap an outer portion of the display, a pointer (14) being mounted on this free end to extend in front of the dial and to be movable opposite said dial, the pointer being provided with a portion for the entry (20) and a portion for the exit (22.2) of a light beam produced by at least one lighting member (19), the lighting member being positioned to emit the light beam towards the dial and in that the dial is adapted to form a member for guiding the light beam towards the entry portion of the pointer.

2. Indicating device according to claim 1, wherein the dial (7) comprises a face for the entry (11) and a face for the exit (9) of the light beam, and the dial (7) comprising an opening, defined by an inner edge of the dial, into which a part (15) of the pointer (14) extends, the inner edge of the dial forming the exit face for the light beam and the portion for the entry (20) of the light beam into the pointer being arranged on that part of the pointer which is received in the opening opposite the inner edge.

3. Indicating device according to claim 2, **characterised in that** the entry face (11) being perpendicular to the light beam, the dial (7) comprises at least one face (12) for redirecting towards the exit face (9) the light beam coming from the entry face.

4. Indicating device according to claim 3, **characterised in that** the redirecting face (12) is covered with a reflective coating (13) which extends over the appropriate portion of the dial.

5. Indicating device according to claim 3, **characterised in that** the entry portion (20) of the pointer (14) is a face perpendicular to a plane of movement of the pointer and **in that** the exit portion (22.2) of the pointer (14) is a face substantially parallel to this plane of movement.

6. Indicating device according to claim 5, **characterised in that** the pointer (14) is mounted to follow a concave path and the exit face (9) of the dial (7) extends parallel to this concave path such that the entry portion (20) of the pointer is at all times orientated towards the exit face of the dial in the course of its movement along the concave path.

7. Indicating device according to claim 6, **characterised in that** the entry face (11) and redirecting face (12) of the dial are adjacent to an outer edge (8) of the dial.
